# EUROPEAN PATENT SPECIFICATION

(11) **EP 2 004 312 B1**
(45) Date of publication and mention of the grant of the patent: **09.03.2011**
(21) Application number: 07736692.0
(22) Date of filing: 15.03.2007
(51) Int. Cl.: B01D 53/94, B01D 53/96, F01N 3/20

(54) **HIGH-EFFICIENCY CATALYTIC METHOD**
HOCHEFFIZIENTES KATALYTISCHES VERFAHREN
PROCÉDÉ CATALYTIQUE À HAUT RENDEMENT

(30) Priority: 07.04.2006 IT MI20060700
(43) Date of publication of application: 24.12.2008
(73) Proprietor: Politecnico di Milano, 20133 Milano (IT)
(72) Inventor: FORZATTI, Pio, I-20052 Monza, Milano (IT); TRONCONI, Enrico, I-20043 Arcore, Monza & Brianza (IT); LIETTI, Luca, I-22063 Cantu', Como (IT); NOVA, Isabella, I-20131 Milano (IT); CASTOLDI, Lidia, I-20154 Milano (IT)
(74) Representative: Long, Giorgio
(86) International application number: PCT/IT2007/000187
(87) International publication number: WO 2007/116422

(56) References cited:
- EP-A- 0 899 002
- EP-A- 1 055 806
- DE-A1-102004 024 370
- US-A1- 2004 261 399

## Description

The present invention relates to a catalytic system for lean burn engines and a method for treating the exhaust gases of these engines.

The life quality improvement and the reduction of social and environmental hazards in the mid-long run is currently a major objective of the scientific community worldwide. Over the last 30 years, scientific technologies for the post-treatment of emissions have allowed achieving a dramatic reduction in the polluting emissions (CO, HC, NOₓ, etc.) from either stationary and moving sources.

Particularly, considering motor vehicle emissions, for proper operation, the traditional "three-way catalysts" impose the use of a nearly stoichiometric air-fuel ratio (A/F = 14,7), i.e. they operate only with stoichiometrically operated engines, which engines have a low oxygen concentration in the exhaust gas.

Using a nearly stoichiometricair-fuel ratio (A/F = 14,7), however, entails about 10-20% consumption increase with consequent production of CO₂.

The best fuel-consumption efficacy is obtained with lean burn engines (about 20-25 A/F), i.e. those engines operating with excess air and that, accordingly, have a high concentration of oxygen in the exhaust gases.

In this case, however, the traditional three-way catalysts cannot be used for converting NOₓ to N₂.

Diesel engines are an example of lean burn engines and allow achieving even higher power efficiency (as high as 30-35%) than spark ignition engines. Even in this case, however, due to the presence of oxygen in the emissions, the traditional three-way catalytic devices cannot be used.

In this context, the so-called Lean NOₓ Trap (LNT) or NOₓ Storage Reduction (NSR) catalysts are capable of selectively reducing the NOₓ to N₂ in the presence of high concentrations of O₂, i.e. under lean burn conditions.

These catalytic systems provide a cyclic work scheme for the engine: during a first step, when the engine works under oxidizing/lean conditions, the catalyst absorbs NOₓ, thus preventing the latter from being released from the motor vehicle; subsequently, the engine is left to work for a short time interval under rich conditions (i.e. reducing conditions) and the fuel, acting as the reducing agent, is introduced into the catalyst, thus causing the reduction of NOₓ to N₂ and thus the regeneration of the catalyst bed, which can start a new cycle.

A typical reference catalytic system is the Pt/BaO/Al₂O₃ system. The various components have specific catalytic functions: particularly, the Pt promotes the NOₓ oxidation to nitrate species, which accumulate on the catalytic system, and the subsequent reduction of the latter to nitrogen, whereas the Ba dispersed on the alumina support allows the build-up of the nitrate species.

These systems, however, suffer from some drawbacks. Particularly, when the catalyst bed reaches the saturation step and thus requires to be regenerated, the regeneration step must be carried out very quickly, in order to avoid affecting the proper operation of the engine. The regeneration is normally carried out by injecting a fuel amount upstream of the catalyst bed. This system has, however, the disadvantage that it requires using a large amount of fuel, and this substantially for two reasons: in order for the regeneration to take place in the shortest time possible, and because a given portion of fuel reacts with oxygen rather than with nitrogen oxides, due to the large amount of oxygen available.

This leads to the generation of many reaction by-products, high local temperature increases, and high fuel consumption. This configuration has a lot of disadvantages, which have been partially resolved by two-bed catalytic systems.

Catalytic systems are known, in fact, which use two catalyst beds arranged in parallel, in which the two beds alternatively operate under oxidizing (or NOₓ absorbing) conditions and reducing conditions (reduction of NOₓ to N₂ by means of fuel injection).

By configuring the beds in parallel, the fuel amount to be used during the regeneration step can be reduced, and the vehicle consumptions can thus be limited (see EP 1055806-A2).

Furthermore, as the nitrogen oxide adsorption step is separated from the regeneration step, the regeneration reaction takes place in the substantial absence of oxygen.

With known systems, however, during the regeneration step, the NOₓ reduction reaction not only leads to the generation of N₂, but also of undesired and polluting by-products, such as NO, NH₃ etc., to the detriment of both the system efficiency and environment. Another disadvantage is that a portion of the reducing agent (fuel) used during the regeneration step results to be admixed to the exhaust gases released from the catalytic system.

In other words, the selectivity and efficacy of known catalytic systems, both those using a catalyst bed and those using two catalyst beds, are not satisfactory so far.

The problem at the heart of the present invention is to provide a catalytic method that does not suffer from the drawbacks of known systems cited above, i.e. which is more effective and more selective, particularly for lean burn engines.

This problem is solved by a catalytic method for treating the exhaust gases released from a lean burn engine such as set forth in the annexed claims.

Accordingly, the present invention relates to a method for treating the exhaust gases of lean burn engines with a catalytic system comprising two catalyst beds arranged in parallel, in which the reducing agent is supplied to the catalyst beds at a controlled dosage. In other words, the reducing agent is supplied to the catalyst beds at concentrations which are a function of the concentration of the nitrogen oxides present in the exhaust gases, build-up time, and regeneration time. Particularly, the reducing agent is supplied within a regeneration time comparable with the build-up time, and at amounts either equal to the amount of adsorbed NOx to be reduced, or in a moderate excess relative thereto, with reference to the stoichiometry of the reduction reaction.

Furthermore, the reducing agent is supplied to the catalyst beds countercurrently relative to the regeneration gas flow.

Further characteristics and advantages of the system and method according to the invention will result from the description below of preferred exemplary embodiments thereof, which are given as a non-limiting illustration, with reference to the attached figure, in which:

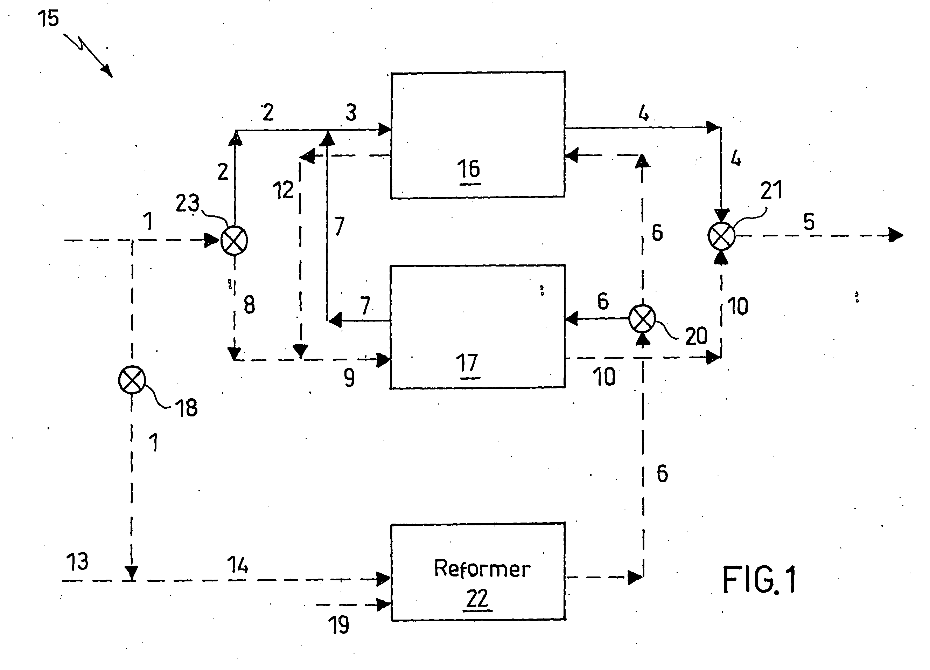

Fig. 1 shows a diagram of the catalytic system of the present invention.

With reference to Fig. 1, the number 15 globally designates the system for treating the exhausted gases from engines operating under lean burn conditions.

The treating system 15 comprises two Lean NOₓ Trap (LNT) catalyst beds 16 and 17 that are placed in parallel relative to an exhausted gas stream 1. The two catalyst beds 16 and 17 have a catalyst therein, which contains one or more noble metals, preferably selected from the group consisting of platinum, palladium, rhodium and silver, which catalyzes the oxidation and reduction reaction, and one or more oxides of an alkaline or alkaline-earth metal, preferably selected from the group consisting of: barium oxide, calcium oxide, potassium oxide, lithium oxide, strontium oxide, sodium oxide, and caesium oxide, which performs the function of building-up (or adsorbing) the nitrogen oxides. These catalysts are dispersed on one or more supports, which are preferably selected from the group consisting of Al₂O₃, TiO₂, SiO₂ and ZrO₂, optionally promoted with other oxides, preferably selected from the group of rare earths or lanthanides.

The exhausted gas stream 1 is supplied, through the line 1, to an open/close valve 23. The valve 23 is rotated such as to supply the exhausted gas stream 1 alternatively to the catalyst bed 16, through the supply line 2, and to the catalyst bed 17, through the supply line 8.

The supply lines 2 and 8 meet, upstream of the catalyst beds 16 and 17, the supply lines 7 and 12, the latter having the function of carrying the streams 7 and 12 of outgoing regeneration gases from the beds 17 and 16, when they operate under reducing/rich conditions.

The catalyst beds 16 and 17 have the outlet lines 4 and 10, respectively, which carry the streams 4 and 10 of the regeneration gases produced by the reduction of the nitrogen oxides, when said beds operate under reducing conditions, to the valve 21.

The valve 21 is an open/close valve, and is rotated such as to allow the regeneration gas stream 4 or 10 to be alternatively supplied to the line 5 and then be blown out into the atmosphere.

The catalyst beds 16 and 17 are alternatively countercurrently supplied to the regeneration gas stream 4 or 10 resulting from the reduction of the nitrogen oxides, from a feeding line 6 of the reducing agent stream 6. In Fix. 1, the feeding line 6 connects the reformer 22 to an open/close valve 20. The valve 20 is rotated such as to feed the stream 6 alternatively to the catalyst bed 16 or 17, according to which one of the two beds is operating under reducing conditions. The reformer 22, which has the task of generating the reducing mixture for the regeneration of the catalyst beds, such as detailed herein below, is supplied via the supply lines 14 and 19. The supply line 19 carries a portion of vehicle fuel to the reformer 22, whereas the line 14 carries a mixture comprising an air stream 13 and a portion of the exhausted gas stream 1, which are conveyed through the supply line 1 and the valve 18.

The catalyst beds 16 and 17 operate alternatively under reducing/rich and oxidizing/lean conditions (i.e. under conditions of adsorption of the NOₓ contained in the exhaust gases).

During a first step, an exhaust gas stream 1 mainly comprising oxygen and nitrogen oxides coming from any type of engine operating under lean burn conditions, via the open/close valve 23, is sent either via the line 2 or via the line 8, according to the system operating cycle, to the catalyst bed 16 or 17.

In the case where the catalyst bed 16 is working under oxidizing/lean conditions, the exhaust gas stream 1 is sent, via the valve 23 and line 2, to the catalyst bed 16, after it has been admixed with the stream 7 of outgoing gases from the catalyst bed 17, to give the stream 3. The catalyst bed 17 is working under reducing/rich conditions, therefore the stream 7 mainly consists of regeneration gases produced by the reduction of NOₓ, such as N₂ and CO₂, but also by a portion of unburnt reducing agent (as will be explained in greater detailed herein below).

The catalyst bed 16 selectively adsorbs the NOₓ, burns the residual fuel, if present, and releases a gas stream 4 purified from the noxious substances, which, through an open/close valve 21, is blown out into the atmosphere (stream 5).

While the catalyst bed 16 is operating under oxidizing/lean conditions, the catalyst bed 17 operates under reducing/rich conditions, i.e. it is regenerated. Particularly, a portion of the exhaust gas stream 1, via the valve 18, is mixed to an air stream 13, such as to give a preferably oxygen-deficient mixture, to give a stream 14 that is sent to a reformer 22 along with a portion of fuel 19 of the vehicle. The reformer 22 is a known device which serves to convert the hydrocarbons, under oxygen-deficient conditions, to CO, H₂, CO₂ and H₂O (reducing mixture). The burning reaction of the reformer 22 is an exothermal reaction which occurs at a temperature ranging between 300 and 550° C. The reformer 22 may be also not present in the treating system of the exhaust gases 15; in this case, the vehicle fuel will be used as the reducing agent, which will be directly sent to the catalyst bed 17, without further transformations.

The reducing gas stream 6 at controlled dosage is directed through the open/close valve 20 only to the catalyst bed 17 and countercurrently introduced thereto in a controlled manner relative to the stream of the exhaust gases 9, which is fed upstream of the bed 17 when the latter operates under oxidizing/lean conditions. The controlled feeding, i.e. at stoichiometric or moderately over-stoichiometric amounts relative to the concentration of adsorbed nitrogen oxides, of the stream 6 of reducing gases to the bed 17 along with the countercurrent supply allow obtaining a controlled reduction of the nitrogen oxides to nitrogen, thus dramatically reducing the generation of by-products (NO, NH₃, etc.). In other words, by modulating the feeding of reducing agent to the catalyst bed, the reduction kinetics is slowed down, and a "cleaner" reaction is obtained.

Furthermore, by feeding the reducing agent to the bed 17 under stoichiometric or moderately over-stoichiometric conditions and countercurrently, sudden temperature increases are avoided, because the reducing agent entering the bed 17 is in contact with low concentrations of NOₓ adsorbed on the bed. In fact, a concentration gradient of adsorbed NOₓ is present on bed 17: the amount of NOₓ is the greatest proximate to the inlet through which the incoming exhausted gas stream 9 is fed, and gradually decreases to a minimum at the inlet through which the reducing gas stream 6 is fed. High temperature gradients, which are generated when a high concentration of nitrogen oxides adsorbed on the bed react with high concentrations of reducing agent, are thereby avoided. This also contributes to a dramatic decrease in the release of NOx caused by quick temperature increases, and in the generation of by-products of the reduction reaction of nitrogen oxides to nitrogen. This also allows extending the catalyser average life.

All this determines an improved efficacy and selectivity of the reduction reaction.

The stream 7 of regeneration gas and non-converted reducing agent is admixed with the stream 2 of exhaust gases, to give the stream 3 which is supplied to the catalyst bed 16, such as explained above in greater detail.

By recycling the stream 7 upwards of the catalyst bed 16, any unreacted portion of reducing agent is prevented from being released into the atmosphere along with the N₂ and CO₂ regeneration gases. This recycling system is another advantage of the inventive system for treating exhaust gases, in that an oxidation catalyst burning the excess reducing agent (H₂ and CO, or vehicle fuel) is not required to be placed downstream of the treating system, i.e. before the gas is blown out into the atmosphere, like in the prior art, in that this function is accomplished using the catalyst bed 16 or 17, which not only is capable of adsorbing the NOₓ, but also of oxidizing the reducing agent to CO₂ and H₂O.

After some time has passed since the catalyst bed 16 has been operating under oxidizing/lean conditions, the catalyst present in this bed will reach the saturation point, when it has adsorbed the highest amount of NOₓ. At this stage, the valve 23 is operated such as to supply the exhaust gas stream 1, via the line 8, to the catalyst bed 17, after it has been admixed with the stream 12 consisting of the gases originating from the regeneration of the catalyst bed 16, to give the stream 9. The catalyst contained in the bed 17 selectively adsorbs the NOₓ, such that the gases released through the line 10 are completely purified from noxious substances and through the valve 21 are sent to the atmosphere (stream 5).

Simultaneously, the catalyst bed 16 is regenerated: the valve 21 is operated such that the reformed (reducing gas) stream 6 is only directed to the bed 16 and countercurrently introduced thereto relative to the stream 2 of the NOₓ-containing exhaust gases.

The outgoing gas stream 12 from the bed 16 is mixed with the exhausted gas stream 8, to give the stream 9 that is fed to bed 17.

Alternatively to the configuration of the system for treating exhaust gases 15 illustrated above, the reducing agent stream 6, instead of being countercurrently supplied to the catalyst bed 16 or 17 relative to the exhaust gas stream 9 or 3, can be concurrently fed with the latter streams, even though this is not according to the present invention.

In conclusion, by operating the regeneration of catalyst beds with controlled amounts of reducing agent relative to the amount of nitrogen oxides adsorbed on the catalyst bed not only allows improving the selectivity of the NOₓ-to-Nitrogen reduction reaction, but also maintaining build-up and regeneration times similar to each other, thus determining a good efficacy and selectivity of the inventive system for treating exhausted gases.

In conclusion, on the one hand, the inventive method allows avoiding the alternating operation of the engine under lean conditions (build-up) and rich conditions (regeneration), with consequent risks of malfunctioning, and on the other hand, it allows avoiding the problems related to the two-bed catalysts.

The inventive method can be applied to any type of motor-driven transport means, such as cars, airplanes, boats, etc., and in the energy-production systems for stationary applications.

## Claims

1. A method for treating exhaust gases of lean burn engines comprising the steps of:
- Providing a catalytic system comprising two catalyst beds (16; 17) connected in parallel, each of which includes a catalyst comprising one or more noble metals and one or more oxides of alkaline or alkaline-earth metal;
- Operating said catalyst beds in an alternated and cyclical manner, under conditions of adsorption of the nitrogen oxides released from a vehicle exhaust gas (2; 8) and under conditions of reduction of said adsorbed nitrogen oxides to give nitrogen using a reducing agent (6);
wherein said reducing agent (6) is supplied to the catalyst bed (16) or (17), operating under reducing conditions, at amounts either equal to the amount of adsorbed NOx to be reduced, or in a moderate excess relative thereto, with reference to the stoichiometry of the reduction reaction, and wherein said reducing agent (6) is countercurrently supplied to the catalyst bed (16) or (17) relative to the flow of said exhaust gas (2) or (8).

2. The method according to claim 1, wherein a first outgoing gas stream (7) or (12) from a first catalyst bed (16) or (17) operating under reducing conditions, is recycled upstream of a second catalyst bed (16) or (17) before it is blown out into the atmosphere.

3. The method according to claim 2, wherein said a first outgoing gas stream (7) or (12) from a first catalyst bed (16) or (17) is introduced to said second catalyst bed (16) or (17) after it has been mixed with a stream (2) or (8) of a vehicle exhaust gas.

4. The method according to any of claims 1 to 3, wherein said reducing agent (6) is supplied at low concentrations such as to avoid temperature increases.

5. The method according to any of claims 1 to 2, wherein fuel (19) is converted in a reformer (22) into a mixture (6) of hydrogen and carbon oxide in the presence of air (13), preferably oxygen-deficient, and a portion of exhaust gas (1).

6. The method according to claim 5, wherein said mixture (6) is supplied, in controlled amounts and countercurrently, to the catalyst bed (17) through a valve (20), when said bed operates under reducing/regenerating conditions.

7. The method according to claim 5 or 6, wherein, after the reduction, a mixture (7) containing nitrogen, nitrogen dioxide, and a portion of unburnt reducing agent, is supplied upstream of the catalyst bed (16), operating under oxidizing conditions, after it has been mixed with an exhaust gas stream (2) released from a vehicle and blown into the system through the valve (23), to give the stream (3).

8. The method of claim 7, wherein the nitrogen oxides contained within said stream (3) are selectively adsorbed on the catalyst of the catalyst bed (16), whereas said portion of unburnt reducing agent is catalytically oxidized to water and carbon dioxide, to give the outgoing mixture (4).

9. The method of claim 7, wherein said outgoing mixture (4) is blown out into the atmosphere through the valve (21).

10. The method according to any of claims 5 to 9, wherein said valve (23) is rotated such as to send the exhaust gas stream (1) to the catalyst bed (17) operating under oxidizing conditions, via the line (8) and after it has been mixed with the outgoing stream (12) from the catalyst bed (16) operating under reducing conditions, to give the mixture (9); and simultaneously the valve (20) is rotated such as to supply the reducing agent (6), in controlled amounts and countercurrently, to the catalyst bed (16), operating under reducing conditions.

11. The method of claim 10, wherein the nitrogen oxides contained within said mixture (9) are selectively adsorbed on the catalyst present in the catalyst bed (17), whereas the portion of unburnt reducing agent contained within the mixture (12) is oxidized to water and nitrogen dioxide before the outgoing mixture (10) from the bed (17) is blown out into the atmosphere through the valve (21).

12. The method according to any of claims 1 to 11, wherein said one or more noble metals are selected from the group consisting of platinum, palladium, rhodium and silver,

13. The method according to any of claims 1 to 12, wherein said one or more oxides of alkaline or alkaline-earth metal are selected from the group consisting of barium oxide, calcium oxide, potassium oxide, lithium oxide, strontium oxide, sodium oxide and caesium oxide.

14. The method according to any of claims 1 to 13, wherein said one or more noble metals and one or more oxides of alkaline or alkaline-earth metal are dispersed on one or more inert supports, preferably Al₂O₃, TiO₂, SiO₂ and ZrO₂, that may be promoted with other oxides, preferably selected from the group of rare earths or lanthanides.

## Patentansprüche

1. Verfahren zur Behandlung von Abgasen von Magerverbrennungsmotoren, umfassend die Schritte:
- Bereitstellen eines katalytischen Systems, umfassend zwei Katalysatorbetten (16; 17), die parallel geschaltet sind, und wobei jeder von diesen einen Katalysator enthält, der ein oder mehrere Edelmetalle und ein oder mehrere Alkali- oder Erdalkalimetalloxide umfasst;
- Betreiben der Katalysatorbetten in einer abwechselnden und cyclischen Weise, unter Bedingungen, unter denen die Stickoxide, die von dem Abgas des Fahrzeugs abgegeben werden (2; 8), adsorbiert werden und unter Bedingungen unter denen die adsorbierten Stickoxide reduziert werden, um Stickstoff unter Verwendung eines Reduktionsmittels (6) zu ergeben;
wobei das Reduktionsmittel (6) in das Katalysatorbett (16) oder (17), das unter reduzierenden Bedingungen betrieben wird, in Mengen entweder gleich zu der Menge von adsorbierten NOx, das reduziert werden soll, oder in einem gemäßigtem Überschuss relativ dazu, mit Referenz zu der Stöchiometrie der Reduktionsreaktion, eingetragen wird und wobei das Reduktionsmittel (6) im Gegenstrom zu dem Katalysatorbett (16) oder (17) relativ zu dem Fluss des Abgases (2) oder (8) eingetragen wird.

2. Verfahren nach Anspruch 1, wobei ein erster austretender Gasstrom (7) oder (12) von einem ersten Katalysatorbett (16) oder (17), das unter reduzierenden Bedingungen betrieben wird, stromaufwärts von einem zweiten Katalysatorbett (16) oder (17) recycliert wird, bevor es in die Atmosphäre rausgeblasen wird.

3. Verfahren nach Anspruch 2, wobei der erste austretende Gasstrom (7) oder (12) von einem ersten Katalysatorbett (16) oder (17) in das zweite Katalysatorbett (16) oder (17) eingeführt wird, nachdem er mit einem Strom (2) oder (8) eines Abgases von einem Fahrzeug gemischt wurde.

4. Verfahren nach einem der Ansprüche 1 bis 3, wobei das Reduktionsmittel (6) in niedrigen Konzentrationen eingetragen wird, so dass Temperaturanstiege verhindert werden.

5. Verfahren nach einem der Ansprüche 1 bis 2, wobei Brennstoff (19) in einem Reformer (22) in eine Mischung (6) aus Wasserstoff und Kohlenstoffoxid in der Gegenwart von Luft (13), bevorzugt sauerstoffarm, und einen Teil von Abgas (1) umgesetzt wird.

6. Verfahren nach Anspruch 5, wobei die Mischung (6) in kontrollierten Mengen und im Gegenstrom in das Katalysatorbett (17) durch ein Ventil (20) eingetragen wird, wenn das Bett unter reduzierenden/regenerierenden Bedingungen betrieben wird.

7. Verfahren nach Anspruch 5 oder 6, wobei nach der Reduktion eine Mischung (7) enthaltend Stickstoff, Stickstoffdioxid und einen Teil von unverbranntem Reduktionsmittel stromaufwärts von dem Katalysatorbett (16), das unter oxidierenden Bedingungen betrieben wird, eingetragen wird, nachdem es mit einem Abgasstrom (2), der von einem Fahrzeug freigegeben wird, gemischt und in das System durch das Ventil (23) geblasen wurde, um den Strom (3) zu ergeben.

8. Verfahren nach Anspruch 7, wobei die Stickoxide, die in dem Strom (3) enthalten sind, selektiv an den Katalysator des Katalysatorbetts (16) adsorbiert werden, wobei der Teil von unverbranntem Reduktionsmittel katalytisch zu Wasser und Kohlenstoffdioxid oxidiert wird, um die austretende Mischung (4) zu ergeben.

9. Verfahren nach Anspruch 7, wobei die austretende Mischung (4) in die Atmosphäre durch das Ventil (21) geblasen wird.

10. Verfahren nach einem der Ansprüche 5 bis 9, wobei das Ventil (23) so gedreht wird, dass der Abgasstrom (1) zum Katalysatorbett (17), das unter oxidierenden Bedingungen betrieben wird, über die Leitung (8) befördert wird, und nachdem er mit dem austretenden Strom (12) von dem Katalysatorbett (16), das unter reduzierenden Bedingungen betrieben wird, gemischt worden ist, um die Mischung (9) zu ergeben; und gleichzeitig das Ventil (20) so gedreht wird, dass das Reduktionsmittel (6) in kontrollierten Mengen im Gegenstrom zum Katalysatorbett (16), das unter reduzierenden Bedingungen betrieben wird, eingetragen wird.

11. Verfahren nach Anspruch 10, wobei die Stickoxide, die in der Mischung (9) enthalten sind, selektiv an den Katalysator, der in dem Katalysatorbett (17) zugegen ist, adsorbiert werden, wobei der Anteil an unverbranntem Reduktionsmittel, der in der Mischung (12) enthalten ist, zu Wasser und Stickstoffdioxid oxidiert wird, bevor die von dem Bett (17) austretende Mischung (10) durch das Ventil (21) in die Atmosphäre rausgeblasen wird.

12. Verfahren nach einem der Ansprüche 1 bis 11, wobei das eine oder mehrere Edelmetall(e) ausgewählt ist/sind aus der Gruppe bestehend aus Platin, Palladium, Rhodium und Silber.

13. Verfahren nach einem der Ansprüche 1 bis 12, wobei das eine oder die mehreren Alkali- oder Erdalkalimetalloxid(e) ausgewählt ist/sind aus der Gruppe bestehend aus Bariumoxid, Calciumoxid, Kaliumoxid, Lithiumoxid, Strontiumoxid, Natriumoxid und Cäsiumoxid,

14. Verfahren nach einem der Ansprüche 1 bis 13, wobei das eine oder die mehreren Edelmetall(e) und eine oder mehrere Alkali- oder Erdalkalimetalloxid(e) auf einem oder mehreren inerten Trägern, bevorzugt Al₂O₃, TiO₂, SiO₂ und ZrO₂, die mit anderen Oxiden, bevorzugt ausgewählt aus der Gruppe von seltenen Erden oder Lanthanoiden, unterstützt sein können, dispergiert sind.

## Revendications

1. Procédé pour le traitement des gaz d'échappement de moteurs à gaz pauvres, comprenant les étapes consistant à :
- fournir un système catalytique comprenant deux lits de catalyseur (16 ; 17) connectés en parallèle, dont chacun comprend un catalyseur comprenant un ou plusieurs métaux nobles et un ou plusieurs oxydes de métal alcalin ou alcalino-terreux ;
- faire fonctionner lesdits lits de catalyseur de manière alternée ou cyclique, dans des conditions d'adsorption des oxydes d'azote libérés par le gaz d'échappement d'un véhicule (2 ; 8) et dans des conditions de réduction desdits oxydes d'azote adsorbés pour fournir de l'azote en utilisant un agent réducteur (6) ;
dans lequel ledit agent réducteur (6) est fourni au lit de catalyseur (16) ou (17), fonctionnant dans des conditions réductrices, en des quantités égales à la quantité de NOx adsorbés à réduire, ou bien en un excès modéré par rapport à cette quantité, par référence à la stoechiométrie de la réaction de réduction, et dans lequel ledit agent réducteur (6) est fourni à contre-courant au lit de catalyseur (16) ou (17) par rapport à l'écoulement dudit gaz d'échappement (2) ou (8).

2. Procédé suivant la revendication 1, dans lequel un premier courant gazeux de sortie (7) ou (12) provenant d'un premier lit de catalyseur (16) ou (17) fonctionnant dans des conditions réductrices est recyclé en amont d'un second lit de catalyseur (16) ou (17) avant son évacuation dans l'atmosphère.

3. Procédé suivant la revendication 2, dans lequel ledit premier courant gazeux de sortie (7) ou (12) provenant d'un premier lit de catalyseur (16) ou (17) est amené audit second lit de catalyseur (16) ou (17) après son mélange à un courant (2) ou (8) de gaz d'échappement d'un véhicule.

4. Procédé suivant l'une quelconque des revendications 1 à 3, dans lequel ledit agent réducteur (6) est fourni à de faibles concentrations de manière à éviter des élévations de température.

5. Procédé suivant l'une quelconque des revendications 1 et 2, dans lequel un carburant (19) est converti dans un reformeur (22) en un mélange (6) d'hydrogène et d'oxyde de carbone en présence d'air (13), de préférence déficient en oxygène, et d'une partie du gaz d'échappement (1).

6. Procédé suivant la revendication 5, dans lequel ledit mélange (6) est fourni, en des quantités ajustées et à contre-courant, au lit de catalyseur (17) par une vanne (20), lorsque ledit lit fonctionne dans des conditions de réduction/régénération.

7. Procédé suivant la revendication 5 ou 6, dans lequel, après la réduction, un mélange (7) contenant de l'azote, du dioxyde d'azote et une partie d'agent réducteur inbrûlé, est fourni en amont du lit de catalyseur (16), fonctionnant dans des conditions oxydantes, après son mélange à un courant de gaz d'échappement (2) libéré par un véhicule et injecté dans le système à travers la vanne (23), ce qui donne le courant (3).

8. Procédé suivant la revendication 7, dans lequel les oxydes d'azote présents dans ledit courant (3) sont adsorbés sélectivement sur le catalyseur du lit de catalyseur (16), tandis que ladite partie d'agent réducteur inbrûlé est oxydée catalytiquement en eau et dioxyde de carbone, ce qui donne le mélange de sortie (4).

9. Procédé suivant la revendication 7, dans lequel ledit mélange de sortie (4) est évacué dans l'atmosphère à travers la vanne (21).

10. Procédé suivant l'une quelconque des revendications 5 à 9, dans lequel ladite vanne (23) est soumise à une rotation de manière à envoyer le courant de gaz d'échappement (1) au lit de catalyseur (17) fonctionnant dans des conditions oxydantes, par le conduit (8) et après son mélange au courant de sortie (12) provenant du lit de catalyseur (16) fonctionnant dans des conditions réductrices, ce qui donne le mélange (9) ; et, simultanément, la vanne (20) est soumise à une rotation de manière à fournir l'agent réducteur (6), en des quantités ajustées et à contre-courant, au lit de catalyseur (16), fonctionnant dans des conditions réductrices.

11. Procédé suivant la revendication 10, dans lequel les oxydes d'azote présents dans ledit mélange (9) sont adsorbés sélectivement sur le catalyseur présent dans le lit de catalyseur (17), tandis que la partie d'agent réducteur inbrûlé présente dans le mélange (12) est oxydée en eau et dioxyde d'azote avant évacuation du mélange de sortie (10) provenant du lit (17) dans l'atmosphère à travers la vanne (21).

12. Procédé suivant l'une quelconque des revendications 1 à 11, dans lequel ledit ou lesdits métaux nobles sont choisis dans le groupe consistant en le platine, le palladium, le rhodium et l'argent.

13. Procédé suivant l'une quelconque des revendications 1 à 12, dans lequel ledit ou lesdits oxydes de métal alcalin ou de métal alcalino-terreux sont choisis dans le groupe consistant en l'oxyde de baryum, l'oxyde de calcium, l'oxyde de potassium, l'oxyde de lithium, l'oxyde de strontium, l'oxyde de sodium et l'oxyde de césium.

14. Procédé suivant l'une quelconque des revendications 1 à 13, dans lequel ledit ou lesdits métaux nobles et ledit ou lesdits oxydes de métal alcalin ou métal alcalino-terreux sont dispersés sur un ou plusieurs supports inertes, de préférence Al₂O₃, TiO₂, SiO₂ et ZrO₂, qui peuvent être activés avec d'autres oxydes, choisis de préférence dans le groupe des terres rares ou des lanthanides.
